# FASCICULE DE BREVET EUROPEEN

(11) **EP 0 723 308 B1**
(45) Date de publication et mention de la délivrance du brevet: **02.06.1999**
(21) Numéro de dépôt: 96400093.9
(22) Date de dépôt: 15.01.1996
(51) Int. Cl.: H01Q 25/00

(54) **Antenne multifaisceaux forte capacité à balayage électronique en émission**
Mehrkeulenantenne von hoher Kapazität mit elektronisch gesteuertem Abtasten beim Senden
Multibeam antenna of high capacity with electronic scanning in transmission

(30) Priorité: 18.01.1995 FR 9500515
(43) Date de publication de la demande: 24.07.1996
(73) Titulaire: ALCATEL, 75008 Paris (FR)
(72) Inventeur: Lenormand, Regis, F-31700 Blagnac (FR); Coulomb, Bernard, F-31240 L'Union (FR); Marre, Jean-Philippe, Résidence Stud'Club, F-31100 Toulouse (FR); Tatard, Michel, F-31037 Toulouse Cedex (FR); Rigal, Christian, F-31100 Toulouse (FR); Villemur, Charles, F-31120 Portet sur Garonne (FR)
(74) Mandataire: Scheer, Luc

(56) Documents cités:
- EP-A- 0 340 429
- EP-A- 0 420 739
- EP-A- 0 488 101

## Description

L'invention concerne une antenne pour des applications de télécommunications par satellite, et en particulier une antenne pouvant servir plusieurs aires au sol (des "spots" en anglais) avec des pinceaux fins de rayonnement ("spot beams" en anglais) . Plus précisément, l'antenne de l'invention est reconfigurable électroniquement pour pouvoir servir des besoins qui peuvent évoluer au cours du temps, par exemple le nombre et/ou l'orientation des spots, et pouvant desservir jusqu'à l'ordre de la centaine de spots simultanément. Il s'agit donc d'une antenne multifaisceaux forte capacité à balayage électronique en émission.

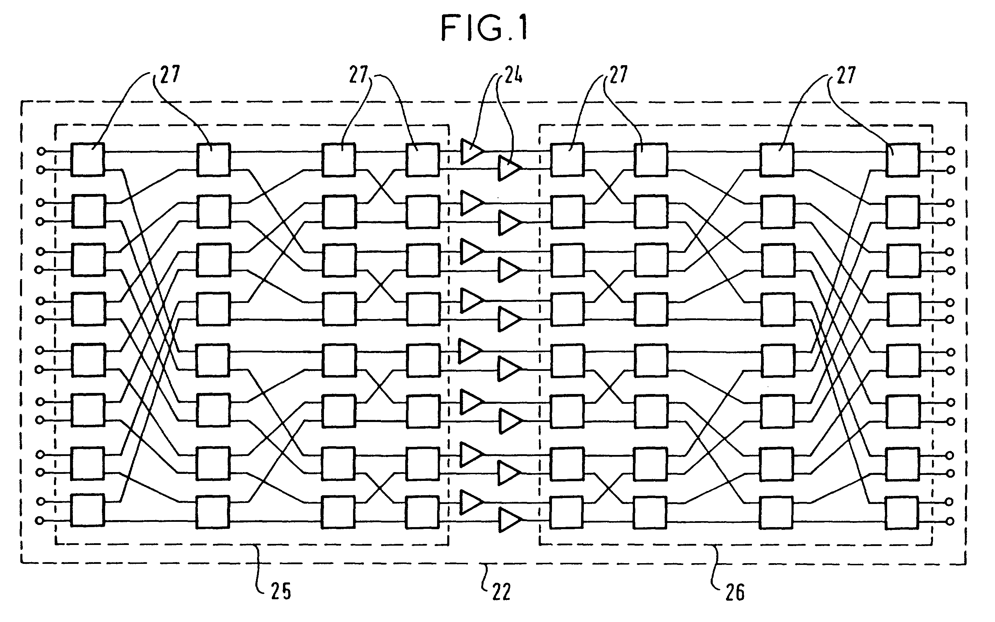

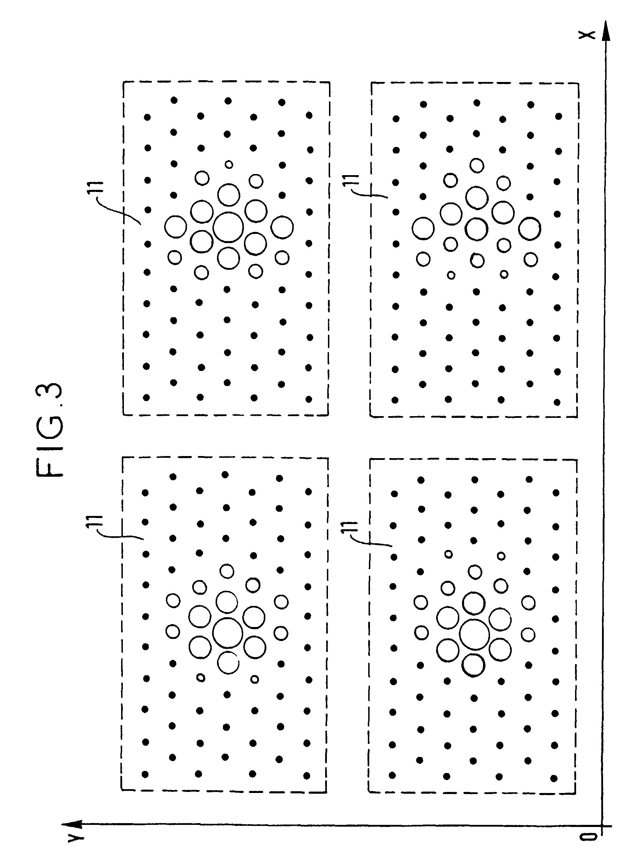

Il est connu par la demande de brevet D1= EP-A1-333 166 au nom de la Demanderesse, une antenne multifaisceaux à reconfiguration électronique en émission. Ce document est cité ici pour sa description de l'art antérieur. D1 décrit une antenne telle que montrée sur les figures 1, 2 et 4, et dont le principe de reconfiguration est explicité sur la figure 3. Cette antenne comprend un réseau 11 de sources élémentaires ; un réflecteur 10 focalisant l'énergie, le réseau étant situé dans la zone focale de ce réflecteur ; et une électronique d'alimentation et commande comprenant :
- **m** circuits (20, 21, ...) de formation de faisceau qui synthétisent **m** faisceaux ;
- un étage d'amplification 22 qui reçoit les sorties de ces circuits de formation combinées par l'intermédiaire de combineurs (non montrés), cet étage d'amplification 22 comprenant des amplificateurs 24 en parallèle suivis d'un coupleur généralisé 26 ;
- un circuit de commutation 30 qui relie les sorties de l'étage amplificateur aux éléments rayonnants 31 du réseau 11.

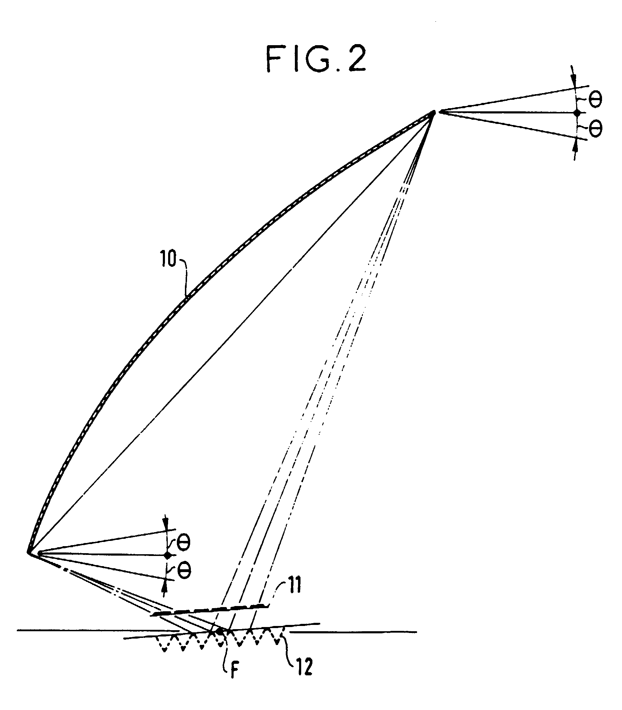

Ce circuit de commutation permet la reconfiguration de l'antenne en permettant de sélectionner la position des éléments rayonnants qui seront excités par les amplificateurs. Le principe est montré sur la figure 3 qui donne un exemple de plusieurs répartitions en amplitude lors de déplacements des faisceaux selon deux directions OX et OY au niveau du réseau 11 de sources 31. Les diamètres des disques portés sur la figure 2 représentent l'amplitude du signal émis par les différentes sources 31 du réseau 11. Le nombre de sources actives est le même pour tous les faisceaux 16 sources pour chaque faisceau dans l'exemple de la figure 2.

En référence à la figure 2, on voit que le changement de position des sources actives sur le réseau 11 change l'angle θ d'orientation du faisceau par rapport à la direction de propagation, après réflexion par le réflecteur 10, d'une source virtuelle 12 placée exactement au foyer F du réflecteur. Ainsi, l'orientation du faisceau, et donc le positionnement du spot au sol, peut être déterminé par la position des sources actives 31 au sein du réseau 11. Les sources actives sont sélectionnées de l'ensemble de sources 31 par le circuit de commutation 30 précité.

Dans une réalisation préférée, les circuits de formation de faisceau comprennent des déphaseurs réglables (non montrés) et des atténuateurs réglables (non montrés) pour permettre la synthèse de faisceau. Avantageusement, l'étage d'amplification 22 comprend deux coupleurs généralisés 25,26 de part et d'autre des amplificateurs 24 disposés en parallèle, tel que montré sur la figure 1. Chaque coupleur généralisé 25, 26 est formé d'une association de coupleurs hybrides 27, raccordés de telle façon que chaque entrée du premier coupleur 25 soit répartie sur tous les amplificateurs et donc sur toutes les sorties des coupleurs hybrides 27 du premier coupleur généralisé 25. Un telle configuration d'étage d'amplification comportant des coupleurs généralisés est connu par exemple par le document D2 = US-A-4,618,831 de S. EGAMI et al., assignés de NTT. Ce document est cité ici pour sa description de l'art antérieur.

On obtient ainsi une répartition de charge quasi-uniforme sur toutes les entrées des amplificateurs 24. On reconstitue ensuite les signaux à l'aide du deuxième coupleur généralisé 26 qui a une structure inverse de celle du premier, et on retrouve les niveaux correspondant à chaque faisceau ici au nombre de deux : F1, F2.

Une telle réalisation optimise le fonctionnement de l'étage d'amplification. Chaque amplificateur est alimenté par des composantes provenant des **m** faisceaux, générés par les **m** circuits de formation de faisceau (20, 21, ...). De cette manière, un changement dans le trafic n'a aucun impact sur le niveau du signal d'entrée appliqué aux amplificateurs, dans le cas où le trafic global reste constant.

En revanche, le déplacement d'une source par rapport au foyer F du réflecteur dégrade le rendement de l'antenne. D'autre part l'efficacité d'émission, pour ces différentes répartitions d'énergie, lorsque l'antenne à une loi de répartition fixe, ne peut être optimale. Il en est de même pour la répartition en phase. L'utilisation des déphaseurs réglables et d'atténuateurs réglables, telle que mentionnée ci-dessus, permet de réaliser la synthèse optimale de chaque source élémentaire comme si elle était au foyer F du réflecteur 10.

Un tel fonctionnement permet de réaliser une antenne dont le gain ne dépend pas de la direction de pointage, tout en maintenant fixe le réflecteur 10 et le réseau 11 de sources 31.

Ce système d'antenne selon l'art antérieur fonctionne bien pour un nombre limité de faisceaux, et pour un déplacement par rapport au foyer F qui ne soit pas trop important. En revanche, pour un nombre important de faisceaux distincts, le réseau 11 de sources 31 prend des dimensions plus importantes, et la synthèse de certains faisceaux requiert l'utilisation des sources 31 qui sont de plus en plus éloignées du foyer F du réflecteur 10. Ceci donne lieu inévitablement à une dégradation des caractéristiques de faisceau, et notamment le niveau des lobes secondaires et donc de l'interférence éventuelle entre faisceaux voisins.

Un autre système d'antenne est connu de l'art antérieur par le document D3 = EP-B1-417 679 au nom de la Demanderesse, concernant une antenne multifaisceaux orientable par commutation bas niveau. Ce document est cité ici pour sa description de l'art antérieur. Selon ce document D3, chaque faisceau est formé à partir des signaux bas-niveau qui sont sélectionnés par un circuit de commutation avant l'amplification par un étage d'amplification semblable à celle que l'on vient de décrire.

D3 propose donc une antenne multifaisceaux orientable par commutation bas niveau comprenant un réflecteur 10 focalisant l'énergie, un réseau 11 de sources élémentaires 31, situé dans la zone focale du réflecteur de manière à réaliser la synthèse du champ électromagnétique dans cette zone focale et une électronique comprenant un étage d'amplification 22 à **n** entrées et **n** sorties, caractérisée en ce que la zone de couverture est réalisée par **n** spots, correspondant chacun à un nombre défini de sources élémentaires 31 actives, ce nombre étant fixe et pareil pour tous les faisceaux. L'électronique de commande et d'alimentation comporte en outre au moins un commutateur bas niveau permettant de relier une entrée à l'une des **f** sorties du commutateur.

De cette manière, la commutation des faisceaux, ainsi que l'amplification des signaux, ont des rendements meilleurs que dans le cas précédent. Néanmoins, cette configuration laisse à désirer quand le nombre de sources devient trop important, quand le nombre de pinceaux devient trop important, ou pour des orientations différentes de faisceaux dont l'écart devient trop important.

Le document D4 = EP-B1-420 739 au nom de l'Agence Spatiale Européenne concerne différents dispositifs d'alimentation des sources élémentaires des antennes telles que décrites ci-dessus. Ce document, considéré par la Demanderesse comme le document le plus proche de l'invention, est cité ici pour sa description de l'art antérieur. Ce document D4 fait état, dans sa colonne 4, lignes 19 à 23, des difficultés de réalisation de matrices de coupleurs hybrides de grande dimension, comme limitant le nombre de sources élémentaires à huit ou à seize au plus. Différents exemples de réalisations sont proposés pour contourner cette difficulté, ces exemples reposant sur l'utilisation de multiples matrices dans chaque dispositif d'alimentation des sources élémentaires.

Selon l'enseignement de ce document D4, chaque faisceau utilise tous les amplificateurs uniformément chargés et au moins une source de chaque groupe, c'est-à-dire au moins une source dont l'alimentation provient de chaque matrice d'une pluralité de matrices.

Dans toutes les réalisations selon D4 (voir par exemple la colonne 8), le nombre de sources par faisceau est fixé et pareil pour tous les faisceaux d'une réalisation donnée. Encore une fois, cette configuration laisse à désirer quand le nombre de sources devient trop important, quand le nombre de pinceaux devient trop important, ou pour des orientations différentes de faisceaux dont l'écart devient trop important.

Le document D5 = EP-A1 422 551 au nom de la Demanderesse décrit une autre antenne similaire à celles décrites ci-dessus. Ce document est cité ici pour sa description de l'art antérieur. Ce document D5 enseigne l'utilisation d'un même nombre de sources pour chaque faisceau, mais avec la condition que la zone de couverture réalisée par plusieurs spots adjacents, est couverte partiellement et simultanément par un ou plusieurs faisceaux dont les accès sont indépendants et utilisant pour cela le même nombre **p** de sources (ou groupes de sources) élémentaires sélectionnées chacune parmi **p** classes de sources qui ne sont jamais sollicitées simultanément dans un même faisceau, de telle sorte qu'à chaque instant une source élémentaire appartenant à une classe et une seule soit sollicitée, la commutation des sources assurant l'agilité du (ou des) faisceau(x).

En contraignant les spots à utiliser le même nombre de sources actives et en limitant le contrôle des sources, par exemple à un contrôle de phase (toutes les sources ayant le même poids en amplitude), on obtient des performances limitées de l'antenne. En revanche, l'architecture du sous-système est simplifiée. Cette solution représente un compromis acceptable si le nombre de faisceaux n'est pas très élevé. Si le nombre de faisceaux est important, les performances de l'antenne sont compromises.

En ce qui concerne la présente invention, nous envisageons la synthèse de l'ordre d'une centaine de faisceaux au moins, choisis parmi un ensemble qui peut compter jusqu'à l'ordre de quelques centaines de possibilités réalisables au sein d'une seule architecture d'antenne et son alimentation (conçues selon l'invention).

Aucune des solutions connues de l'art antérieur ne semblerait réalisable à une telle échelle de complexité, tout au moins en respectant les contraintes de l'embarcation sur une plateforme spatiale (en ce qui concerne le poids, la fiabilité, l'encombrement ...), avec des performances acceptables pour une centaine de faisceaux.

L'invention a donc pour but de pallier les inconvénients de l'art antérieur en vue de la réalisation d'une antenne multifaisceaux forte capacité à balayage électronique en émission, capable de fournir de l'ordre d'une centaine de faisceaux.

L'invention propose à ces fins, une antenne multifaisceaux comprenant :
- un réseau 11 de Nₑ sources élémentaires 31 ;
- des moyens optiques formant un réflecteur 10 ou une lentille et focalisant l'énergie ;
le réseau étant situé dans la zone focale desdits moyens focalisant ;
- et un dispositif d'alimentation et de commande coopérant avec ces Nₑ sources primaires 31 et produisant N_{b} faisceaux engendrés chacun à partir d'un sous-groupe de sources primaires dont certaines sont partagées entre faisceaux se recoupant ;
ce dispositif d'alimentation et de commande comprenant des moyens de déphasages et des moyens d'atténuations, ces moyens étant organisés selon Nₑ voies d'alimentation desdites Nₑ sources primaires, chaque voie d'alimentation comportant des moyens spécifiques permettant d'agir sur la phase et sur l'amplitude d'un signal d'excitation dans chaque voie d'alimentation ;
**caractérisée en ce que** chaque faisceau requis est engendré par l'antenne multifaisceaux uniquement en agissant sur la phase et sur l'amplitude de l'excitation fournie à chaque source élémentaire faisant partie dudit faisceau :
**et en ce que** le nombre de sources Nᵢ contribuant à un faisceau **i**, 1 ≤ i ≤ N_{b} , n'est pas le même pour tous les faisceaux, Nᵢ étant déterminé en fonction des caractéristiques désirées dudit faisceau **i**.

Selon une caractéristique, lesdits moyens d'atténuations sont des atténuateurs réglables permettant d'agir sur l'amplitude dans chaque voie, et permettant un réglage continu entre une amplitude maximum et une amplitude nulle, dans le cas où la voie concernée ne doit pas contribuer à un faisceau donné **i**.

Selon un mode de réalisation avantageuse, ledit dispositif d'alimentation comprend une pluralité P de matrices diviseurs de puissance d'ordre **M**_{**j**} constituées de coupleurs hybrides élémentaires, et toutes les sorties des P matrices qui sont raccordées aux sources élémentaires le sont par des connexions qui sont aussi entrelacées que possible.

Selon une réalisation particulière, ledit dispositif d'alimentation comprend P = 4 matrices diviseurs de puissance d'ordre Mⱼ = 16 dont toutes les sorties sont raccordées aux Nₑ = 64 sources élémentaires 31 qui composent ledit réseau 11.

D'autres avantages et caractéristiques de l'invention ressortiront de la description détaillée qui suit, avec ces dessins annexés qui sont donnés à titre d'exemples non limitatifs de réalisations selon l'invention ou de quelques unes de ses principales caractéristiques, et sur lesquels :
- la figure 1, déjà évoquée, représente schématiquement un étage d'amplification 22 connue de l'art antérieur, avec ses matrices de coupleurs 27 configurées en diviseur 25 / combineur 26 de puissance ;
- la figure 2, déjà évoquée, montre schématiquement une antenne connue de l'art antérieur, avec un réflecteur focalisant 10 et un réseau 11 de sources 31 en son foyer F ;
- la figure 3, déjà évoquée, qui donne un exemple de plusieurs répartitions en amplitude lors des déplacements des faisceaux selon deux directions OX et OY au niveau du réseau 11 de sources 31 ;
- la figure 4, qui montre schématiquement un dispositif d'alimentation et de commande connu de l'art antérieur , pour deux faisceaux F1, F2 ;
- la figure 5, qui montre schématiquement un exemple d'un dispositif d'alimentation et de commande de Fn faisceaux simultanés apte à être intégré à l'antenne selon l'invention ;
- la figure 6, qui montre schématiquement un premier exemple d'un réseau 11 de Nₑ = 64 sources élémentaires 31 appartenant aux quatres groupes (A, B, C, D), disposés selon une caractéristique de l'invention ;
- la figure 7, qui montre schématiquement un autre exemple d'un réseau 11 de Nₑ = 61 sources élémentaires 31 appartenant aux quatre groupes (A, B, C, D), disposés selon une caractéristique de l'invention ;
- la figure 8, qui montre schématiquement des contours de iso-puissance à -3 dB et à -10 dB dans le plan focal de l'antenne pour un pointage dans l'axe (0°) et pour un dépointage de θ = 20°.

Sur toutes les figures, les mêmes repères se réfèrent aux mêmes éléments ; l'échelle n'est pas toujours respectée pour des raisons de clarté du dessin.

La réalisation d'une antenne selon l'invention s'appuie sur des technologies connues et illustrées par les figures 1 à 4 qui représentent des réalisations connues de l'art antérieur.

Ainsi, l'antenne de l'invention comprend un réseau 11 de Nₑ sources élémentaires 31 ; des moyens optiques formant un réflecteur 10 ou une lentille et focalisant l'énergie ; le réseau étant situé dans la zone focale desdits moyens focalisant, tel que montré sur la figure 2.

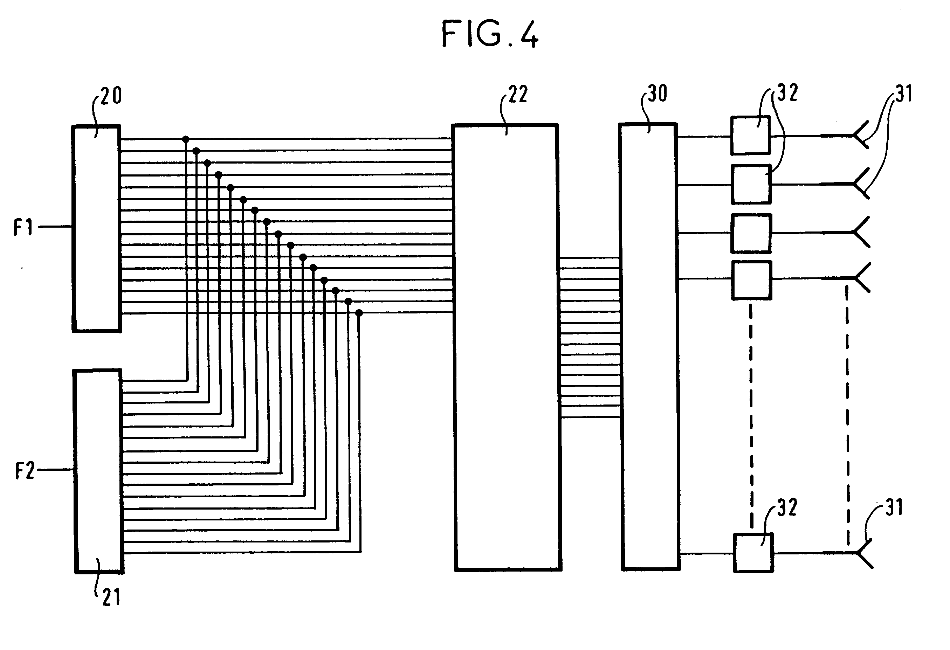

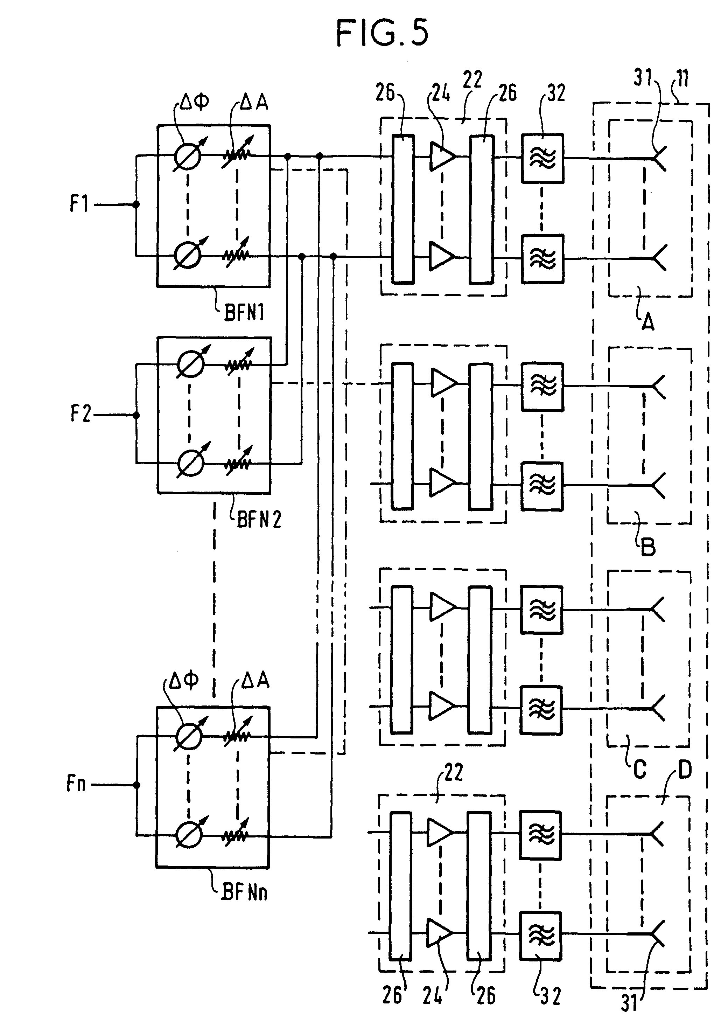

L'antenne de l'invention comprend en outre un dispositif d'alimentation et de commande coopérant avec ces Nₑ sources primaires 31 , ce dispositif pouvant être similaire à celui montré sur la figure 4 par exemple. Une réalisation particulière d'un tel dispositif est montrée sur la figure 5, décrite ci-après. L'étage d'amplification utilisé dans un dispositif d'alimentation et de commande selon l'invention pourrait être le même que celui montré sur la figure 1, ou dans une réalisation particulière, une pluralité de blocs d'amplification selon la figure 1. En effet, à l'état de l'art actuel de fabrication de telles matrices, la taille maximale réalisable serait une matrice 16 x 16, donc pour un nombre de sources élémentaires plus élevé, il faut recourir à une pluralité de matrices dont la dimension de chaque matrice ne dépasse pas 16 x 16.

Le dispositif d'alimentation et de commande comprend en outre des moyens de déphasages Δφ et des moyens d'atténuations ΔA, non montrés sur la figure 4 mais montrés explicitement sur l'exemple de la figure 5. Sur la figure 5, on voit schématiquement que chaque faisceau F1, F2, ...Fn est synthétisé par un réseau de formation de faisceau respectif BFN1, BFN2, ... BNFn. Plus exactement, le signal à véhiculer dans chaque faisceau respectif est appliqué à l'entrée de chaque BFN, où les déphasages et atténuations nécessaires à la synthèse du faisceau respectif sont appliqués au signal respectif via des déphaseurs réglables Δφ et des atténuateurs réglables ΔA. En effet, un BFN n'est qu'un réseau de déphaseurs réglables et d'atténuateurs réglables, ici au nombre de 64 atténuateurs et 64 déphaseurs pour chaque BFN, ce qui correspond au nombre maximal de sources 31 de l'antenne dans cet exemple. Chaque BFN a donc 64 sorties dans cet exemple.

Les 64 signaux provenant de chacun des n BFN sont combinés par des combineurs (non montrés) et appliqués à l'étage d'amplification à 64 voies. Dans une réalisation pratique, et telle que montrée sur la figure 5, l'étage d'amplification 64 voies est constitué de quatre blocs d'amplification 22 ayant 16 voies chacune, conformément à la figure 1. De la même manière que dans l'art antérieur, il est avantageux d'intercaler un premier 25 et un second 26 coupleur généralisé respectivement formé d'une association de coupleurs hybrides 27 de part et d'autre des amplificateurs 24 de façon à ce que chaque entrée du premier coupleur soit répartie sur tous les amplificateurs et donc sur toutes les sorties des coupleurs hybrides du premier coupleur généralisé 25.

On obtient alors une répartition de charge quasi-uniforme sur toutes les entrées des amplificateurs 24 au sein d'un seul bloc d'amplification 22. On reconstitue ensuite les signaux à l'aide d'un deuxième coupleur généralisé 26 qui à une structure inverse du premier, pour retrouver les niveaux correspondant à chaque faisceau F1, F2, ... Fn. Les 64 voies amplifiées sont ensuite acheminées via un banc de filtres passe-bande 32 vers les éléments rayonnants 31, qui sont au nombre de 64.

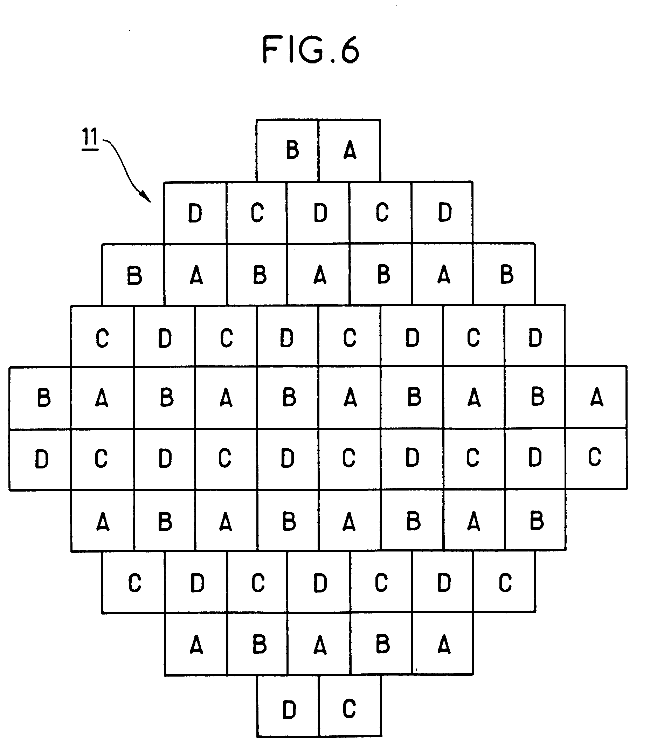

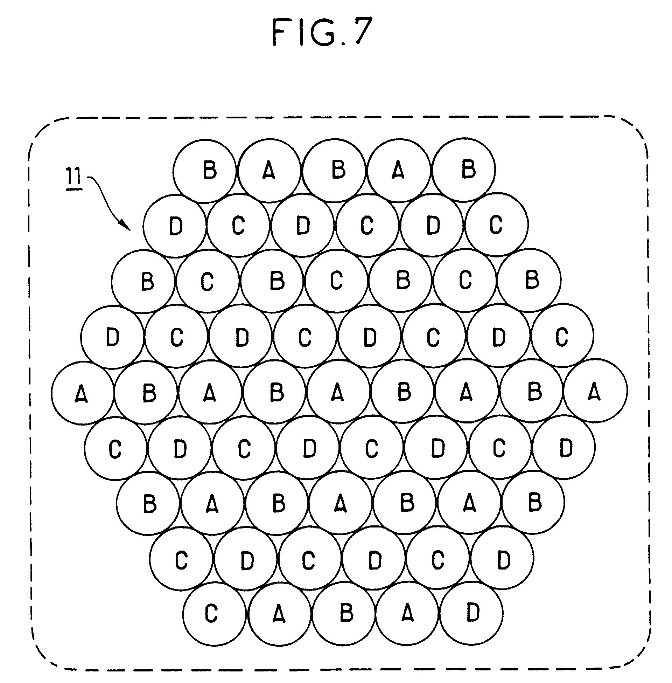

Ces 64 éléments sont naturellement divisés en quatre groupes A, B, C, D de 16 éléments chacun, correspondant à chaque bloc d'amplification. Selon une réalisation préférée de l'invention, les éléments de chaque groupe A, B, C, D sont aussi mélangés que possible dans leur disposition dans le réseau 11 de sources 31. C'est-à-dire que les éléments des différents groupes sont disposés de manière à ce qu'un élément d'un groupe donné ne soit environné directement par aucun autre élément rayonnant du même groupe. Deux exemples d'une telle disposition sont montrés sur les figures 6 et 7. Un telle disposition permet de conserver les avantages d'un étage d'amplification unique, malgré le nombre de blocs d'amplification nécessaire pour alimenter un nombre élevé de sources.

Sur la figure 6, on voit un exemple selon une caractéristique de l'invention, d'une disposition quasi-rectangulaire de 64 sources élémentaires 31 distribuées sur un réseau 11 destiné a être positionné au plan focal d'un réflecteur focalisant 10. Les sources alimentées à partir ne chaque groupe A, B, C, D sont indiquées par la lettre correspondante. On constate qu'aucune source d'un groupe donné ne se trouve disposée adjacente à une autre source du même groupe. Les circuits de connexions entre les quatre matrices de seize sorties chacune, et les sources élémentaires 31 montrées sur la figure 6, sont ainsi aussi entrelacées que possible. Cet entrelacement peut être réalisé utilisant des lignes de transmission coaxiales par exemple, ce qui permet de conserver les phases conférées par les déphaseurs des BFN, moyennant le respect de la longueur des chemins respectifs de propagation radioélectrique.

Sur la figure 7, on voit un autre exemple selon une caractéristique de l'invention, d'une disposition hexagonale de 61 sources élémentaires 31 distribuées sur un réseau 11 destiné a être positionné au plan focal d'un réflecteur focalisant 10. Les sources alimentées à partir de chaque groupe A, B, C, D sont indiquées par la lettre correspondante. Trois sorties des quatre étages d'amplification à seize voies ne sont pas utilisées, et sont terminées sur des charges adaptées (une sortie par étage d'amplification). Il y a donc 15 sources de chaque groupe A, C, D, et 16 sources du groupe B. On constate qu'aucune source d'un groupe donné ne se trouve disposée ajacente à une autre source du même groupe. Les circuits de connexions entre les quatre matrices de sortie des blocs d'amplification, et les sources élémentaires 31 montrées sur la figure 7, sont ainsi aussi entrelacées que possible.

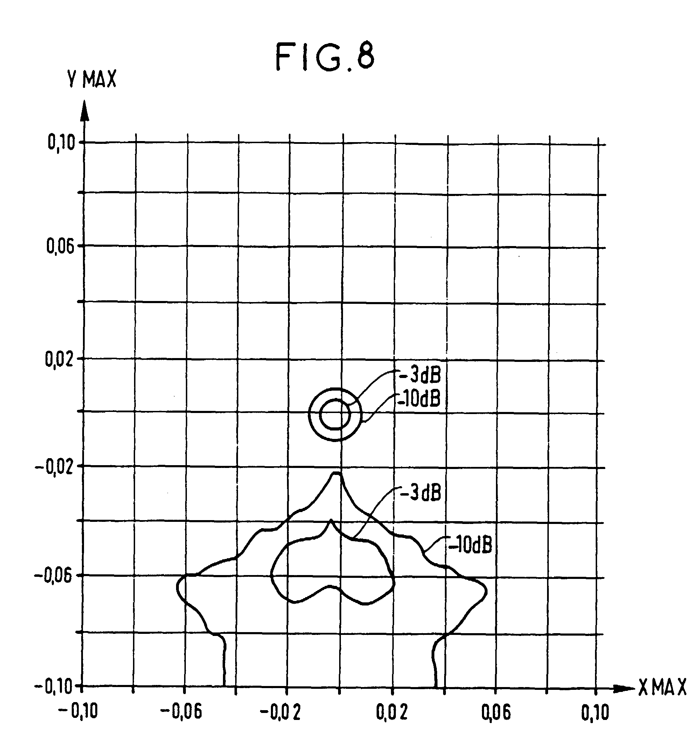

La figure 8 montre schématiquement des contours de iso-puissance à -3 dB et à -10 dB dans le plan focal de l'antenne selon l'invention pour un pointage dans l'axe (0°) et pour un dépointage de θ = 20°. Si l'on imagine une répartition uniforme de sources élémentaires 31 dans un réseau 11 selon une disposition tels les exemples que l'on vient de décrire, on constate l'intérêt de l'invention pour la synthèse des faisceaux ayant un dépointage important.

En effet, on voit sur cette figure que la distribution d'énergie nécessaire pour la synthèse d'un faisceau dirigé selon un dépointage de θ = 20° est relativement étendue, et requiert un nombre relativement important, de l'ordre de seize sources élémentaires par exemple, ou plus, pour obtenir une synthèse correcte.

En revanche, on voit sur cette figure que la distribution d'énergie nécessaire pour la synthèse d'un faisceau dirigé selon l'axe est très compacte, et ne requiert donc qu'un faible nombre de sources, peut être de l'ordre de quatre à huit dans l'exemple montré.

La caractéristique principale de l'invention, à savoir que le nombre de sources Nᵢ contribuant à un faisceau **i**, est variable et déterminé en fonction des caractéristiques désirées dudit faisceau **i**, montre tout son intérêt pour réaliser les lois d'illumination correspondant à ces deux spots. Si au contraire, on utilise le même nombre de sources pour la synthèse de ces deux spots, la qualité de synthèse se trouve être fortement dégradée, ce qui a une incidence directe et néfaste sur l'efficacité de l'antenne.

Les quelques exemples décrits ci-dessus l'ont été pour illustrer de manière non-limitatif les principes de l'invention et de quelques unes de ses principales caractéristiques. L'homme de l'art saura décliner ces principes dans des multiples réalisations, sans pour autant sortir du cadre de l'invention.

Notamment, la caractéristique principale de l'invention peut être combinée avec les caractéristiques des réalisations connues, par exemple celles citées dans les documents D1 à D5 ci-dessus. Ainsi, un nombre de sources élémentaires encore plus élevé peut être utilisé, en conjonction avec un circuit de commutation tel que décrit dans le document D1. Ou encore, l'orientation de faisceaux peut être obtenu par une commutation bas niveau tel qu'enseigné par le document D3. Toutes les configurations de circuits d'alimentation et de commande imaginables peuvent être combinées avec les caractéristiques de l'invention, et notamment toutes les configurations énumérées dans le document D4. Mêmes les caractéristiques du document D5 peuvent être combinées avec l'invention, à l'exception bien sûr des contraintes sur le nombre de sources contribuant à chaque faisceau.

## Revendications

1. Antenne multifaisceaux comprenant :
- un réseau (11) de Nₑ sources élémentaires (31) ;
- des moyens optiques formant un réflecteur (10) ou une lentille et focalisant l'énergie ;
le réseau étant situé dans la zone focale desdits moyens focalisant ;
- et un dispositif d'alimentation et de commande coopérant avec ces Nₑ sources primaires (31) et produisant N_{b} faisceaux engendrés chacun à partir d'un sous-groupe de sources primaires dont certaines sont partagées entre faisceaux se recoupant ;
ledit dispositif d'alimentation et de commande comprenant des moyens de déphasages et des moyens d'atténuations, ces moyens étant organisés selon Nₑ voies d'alimentation desdites Ne sources primaires, chaque voie d'alimentation comportant des moyens spécifiques permettant d'agir sur la phase et sur l'amplitude d'un signal d'excitation dans chaque voie d'alimentation ;
chaque faisceau requis étant engendré par l'antenne multifaisceaux uniquement en agissant sur la phase et sur l'amplitude de l'excitation fournie à chaque source élémentaire faisant partie dudit faisceau :
**caractérisée en ce que** le nombre de sources Nᵢ contribuant à un faisceau **i** , 1 ≤ i ≤ N_{b}, n'est pas le même pour tous les faisceaux, Nᵢ étant déterminé en fonction des caractéristiques désirées dudit faisceau **i**.

2. Antenne selon la revendication 1, caractérisée en ce que lesdits moyens d'atténuations sont des atténuateurs réglables (Δ_{A}) permettant d'agir sur l'amplitude dans chaque voie, et permettant un réglage continu entre une amplitude maximum et une amplitude nulle, cette dernière étant choisie dans le cas où la voie concernée ne doit pas contribuer à un faisceau donné **i**.

3. Antenne selon l'une quelconque des revendications précédentes, caractérisée en ce que ledit dispositif d'alimentation comprend une pluralité P de matrices diviseurs de puissance d'ordre Mⱼ constituées de coupleurs hybrides élémentaires (27), et toutes les sorties des P matrices qui sont raccordées aux sources élémentaires (31) le sont par des connexions qui sont aussi entrelacées que possible.

4. Antenne selon l'une quelconque des revendications précédentes, caractérisée en ce que ledit dispositif d'alimentation comprend P = 4 matrices diviseurs de puissance (A, B, C, D) d'ordre Mⱼ = 16 dont toutes les sorties sont raccordées aux Nₑ = 64 sources élémentaires (31) qui composent ledit réseau (11).

## Patentansprüche

1. Mehrkeulenantenne, die umfaßt:
- eine Anordnung (11) von Nₑ Elementarquellen (31);
- optische Mittel, die einen Reflektor (10) oder eine Linse bilden und die Energie fokussieren; wobei sich die Anordnung im Fokus der genannten fokussierenden Mittel befindet;
- und eine Versorgungs- und Steuereinrichtung, die mit diesen Nₑ Primärquellen (31) zusammenwirkt und N_{b} Strahlungskeulen erzeugt, von denen jede, ausgehend von einer Untergruppe von Primärquellen, von denen bestimmte zwischen den übereinstimmenden Strahlungskeulen aufgeteilt werden, erzeugt wird; die genannte Versorgungs- und Steuereinrichtung umfaßt Mittel zur Phasenregelung und Mittel zur Dämpfung, die entsprechend den Nₑ Versorgungswegen der genannten Nₑ Primärquellen organisiert sind,
wobei jeder Versorgungsweg spezifische Mittel umfaßt, die es ermöglichen, auf die Phase und auf die Amplitude eines Erregungssignals aufjedem Versorgungsweg einzuwirken; und
wobei jede geforderte Strahlungskeule durch die Mehrkeulenantenne erzeugt wird, indem nur auf die Phase und auf die Amplitude einer Erregung eingewirkt wird, die jeder zur genannten Strahlungskeule gehörenden Elementarquelle, zugeleitet wird:
**dadurch gekennzeichnet, daß** die Zahl der Quellen Nᵢ, die an einer Strahlungskeule **i** teilhaben, 1 ≤ i ≤ N_{b}, nicht für alle Strahlungskeulen gleich ist, wobei Nᵢ entsprechend den gewünschten Merkmalen der genannten Strahlungskeule i bestimmt wird.

2. Antenne nach Anspruch 1,
**dadurch gekennzeichnet, daß** die genannten Dämpfungsmittel regelbare Dämpfungsglieder (Δ A) sind, die es ermöglichen, auf die Amplitude jedes Weges einzuwirken, und eine stufenlose Regelung zwischen einer Maximalamplitude und der Nullamplitude ermöglichen, wobei das letztere in dem Fall gewählt wird, wo der betreffende Weg nicht an einer gegebenen Strahlungskeule i teilhaben soll.

3. Antenne nach einem der vorhergehenden Ansprüche,
**dadurch gekennzeichnet, daß** die genannte Versorgungseinrichtung eine Vielzahl P von Leistungsteilermatrizen der Größe Mⱼ, die sich aus elementaren Hybridkopplern (27) zusammensetzen, umfaßt und alle, mit den Elementarquellen (31) verbundenen, Ausgänge der P Matrizen, durch Verbindungsglieder, die wenn möglich auch verflochten sind, verschalten sind.

4. Antenne nach einem der vorhergehenden Ansprüche,
**dadurch gekennzeichnet, daß** die genannte Versorgungseinrichtung P = 4 Leistungsteilermatrizen (A, B, C, D), der Größe Mj = 16, umfaßt, deren sämtliche Ausgänge mit den Nₑ = 64 Elementarquellen (31), die die genannte Anordnung (11) zusammensetzen, verschalten sind.

## Claims

1. A multibeam antenna comprising:
• an array (11) of Ne elementary sources (31);
• energy-focusing optical means comprising a reflector (10) or a lens:
the array being situated in the focal zone of said focusing means:
• and a feed and control circuit co-operating with the Ne primary sources (31) to produce Nb beams each generated from a subgroup of the primary sources, some of which are shared between overlapping beams;
the feed and control circuit comprising phase shifter means and attenuator means. said means being organized in Ne feed channels for said Ne primary sources, each feed channel including specific means for acting on the phase and the amplitude of an excitation signal in each feed channel; and
each required beam is generated by the multibeam antenna solely by acting on the phase and the amplitude of the excitation delivered to each elementary source forming a portion of said beam;
characterized in that the number of sources Ni contributing to a beam i, 1 ≤ i ≤ Nb, is not the same for all the beams, Ni being determined as a function of the characteristics desired for said beam i.

2. An antenna according to claim 1, characterized in that said attenuation means are adjustable attenuators (ΔA) serving to act on amplitude in each channel, and enabling amplitude to be adjusted continuously between a maximum amplitude and zero amplitude, said amplitude being selected whenever the channel concerned is not required to contribute to a given beam i.

3. An antenna according to any preceding claim, characterized in that said feed circuit comprises a plurality P of power-divider matrices of order Mj constituted by elementary hybrid couplers (27), and all of the outputs of the P matrices which are connected to the elementary sources (31) are connected by connections which are as interlaced as possible.

4. An antenna according to any preceding claim, characterized in that said feed circuit comprises P = 4 power-divider matrices (A, B, C, D) of order Mj = 16, with all of the outputs thereof being connected to the Ne = 64 elementary sources (31) making up said array (11).
